# EUROPEAN PATENT SPECIFICATION

(11) **EP 0 738 827 B1**
(45) Date of publication and mention of the grant of the patent: **27.10.1999**
(21) Application number: 96106312.0
(22) Date of filing: 22.04.1996
(51) Int. Cl.: F02B 25/14

(54) **Internal combustion engine of the two-stroke cycle type**
Zweitaktbrennkraftmaschine
Moteur à combustion interne du type à deux temps

(30) Priority: 20.04.1995 JP 9530995
(43) Date of publication of application: 23.10.1996
(73) Proprietor: YAMAHA HATSUDOKI KABUSHIKI KAISHA, Iwata-shi Shizuoka-ken, 438 (JP)
(72) Inventor: Ibara, Takeru, Iwata-shi, Shizuoka-ken (JP); Moriya, Yoshihiko, Iwata-shi, Shizuoka-ken (JP); Motoyama, Yu, Iwata-shi, Shizuoka-ken (JP)
(74) Representative: Grünecker, Kinkeldey, Stockmair & Schwanhäusser Anwaltssozietät

(56) References cited:
- EP-A- 0 454 101
- US-A- 4 461 260
- US-A- 4 989 554
- US-A- 5 113 829
- US-A- 5 231 958
- US-A- 5 261 376
- US-A- 5 404 843
- PATENT ABSTRACTS OF JAPAN vol. 014, no. 549 (M-1055), 6 December 1990 & JP 02 233840 A (NIPPONDENSO CO LTD), 17 September 1990,

## Description

This invention relates to an internal combustion engine of the two-stroke cycle type, comprising a cylinder head affixed to at least one cylinder block, a crankcase fastened to said at least one cylinder block and defining a crank chamber accommodating a crankshaft and communicating with at least one cylinder, at least one piston reciprocatably received in said cylinder, and an intake passage provided with a throttle valve and communicating with said crank chamber via an opening being operable by a reed valve, wherein a fuel injection device provided at the intake passage for injecting fuel into said intake passage, said fuel injection device being controllable by a control means in response to engine operating conditions detected by an intake pipe pressure detecting sensor, an engine speed detecting sensor and a throttle opening detecting sensor for supplying said control means with respective signals indicative of said engine operating conditions, and to a method of providing an intemal combustion engine of the two-stroke cycle type with fuel, said engine comprising a cylinder head affixed to at least one cylinder block, a crankcase fastened to said at least one cylinder block and defining a crank chamber accommodating a crankshaft and communicating with at least one cylinder, at least one piston reciprocatably received in said cylinder, and an intake passage provided with a throttle valve and communicating with said crank chamber via an opening being operable by a reed valve, wherein a fuel injection device injects fuel into said intake passage and being controlled by a control means, whereas said control means controls said fuel injection device on the basis of engine operating conditions detected by an intake pipe pressure detecting sensor, an engine speed detecting sensor and a throttle opening detecting sensor.

Such an internal combustion engine as well as such a method are known from US 5,113,829 or JP-2233840.

Moreover, the 2-cycle engine has generally been supplied with fuel through a carburetor or a fuel injection device, as mentioned above, provided on its intake pipe, and an appropriate amount of fuel, corresponding to the intake pipe pressure adjusted at the venturi portion in the intake pipe by adjusting the intake pipe passage area with a piston provided in the carburetor, is suctioned up from the float chamber, and the fuel thus suctioned up is mixed with air to produce mixture, which is suctioned into the crank chamber while the reed valve is opened by the pressure difference between the crank chamber and intake pipe.

When a carburetor is used to supply fuel to the 2-cycle engine as described above, the reed valve is opened by the pressure drop in the crank chamber and fresh air (mixture) is suctioned from the intake passage by which the pressure of the intake passage is lowered and fuel is suctioned up from the float chamber.

Therefore, fuel continues to be suctioned up from the float chamber just until the pressure in the crank chamber rises and the reed valve is closed, but most of fuel suctioned up just before the reed valve is closed can not pass the reed valve before the reed valve is closed and will remain on the surface of the reed valve. Although the fuel thus remaining on the reed valve is conveyed by the fresh air (mixture) from the intake passage into the crank chamber when the reed valve is opened for the next time or later and ultimately reaches the combustion chamber, there is a problem that a response lag is inevitably caused especially while in the transient state.

Further, in conjunction with both fuel supply systems, there is another problem that, since the 2-cycle engine is so constructed that the supplied fuel reaches the cylinder through the crank chamber and the scavenging path, the wall area of the mixture conveying path becomes larger, fuel is apt to stick to the wall surface on its way to the combustion chamber, and thus it is difficult to control the air-fuel ratio.

Still further, requirements are increasing for fuel consumption improvement and for cleaner exhaust gas accompanying the reduction of natural fuel production and the environmental pollution, and, to cope with such requirements, it is becoming more and more necessary to control the air-fuel ratio more accurately and it has been required not only to control the fuel supply only by the mechanically caused pressure difference but to positively control the fuel supplying period with a fuel supplying system provided.

Accordingly, it is an objective of the present invention to provide an improved intemal combustion engine as indicated above having an improved fuel consumption accompanied by a generation of cleaner exhaust gas and has an enhanced performance.

According to the invention, this objective is solved for an internal combustion engine as indicated above in that a crank chamber pressure detecting sensor being provided and that said control means comprising a comparator for comparing signals supplied by said crank chamber pressure detecting sensor and said intake pipe pressure detecting sensor, a reed valve opening/closing timing calculator fed by said comparator and by a signal of said engine speed detecting sensor, whereas said signal of said engine speed detecting sensor in addition is fed to a fuel injection period calculator further receiving signals of said throttle opening detecting sensor, and an injection timing calculator supplied with respective signals of said reed valve opening/closing timing calculator and said fuel injection period calculator.

It is another objective of the present invention to provide an improved method for providing an internal combustion engine of the two-stroke cycle type with fuel as indicated above ensuring an enhanced fuel consumption and the generation of cleaner exhaust gas and simultaneously enhances the engine performance.

According to the present invention, this objective is solved for a method as indicated above in that a crank chamber pressure detecting sensor detects the crank chamber pressure and that said control means compares pressure signals of said crank chamber pressure detecting sensor and an intake pipe pressure detection sensor and inputs the respective result to a reed valve opening/closing timing calculator which also receives an engine speed signal and supplies a signal to an injection timing calculator, said injection timing calculator also receives a further signal from a fuel injection period calculator which calculates a signal based on said engine speed signal and a throttle opening signal, whereby said injection timing calculator inputs a control signal to said fuel injection device.

According to an embodiment of the present invention, said crank chamber pressure detecting sensor being provided at a wall of said crankcase, said intake pipe pressure detecting sensor being located downstream of said throttle valve, said engine speed detecting sensor arranged within said crank chamber and said throttle opening detecting sensor either provided at said throttle valve or at a throttle grip.

Since said engine operating condition detecting means comprises an engine speed detecting sensor and a throttle opening detecting sensor, it may be advantageous when said control means comprises an injection terminating or starting timing calculator and an injection period calculator both supplied with respective signals of said engine speed detecting sensor and said throttle opening detecting sensor, and an injection timing calculator connected to said injection terminating or starting timing calculator and said injection period calculator.

In order to further enhance the engine performance, it is advantageous when said control means is provided with a storage means containing a map of opening/closing timing data of said intake valve means which may be a reed valve.

According to still another embodiment of the present invention, at least most of a predetermined amount of fuel is injected during the period of time said intake valve means is opened, whereas it is advantageous when the fuel injection is terminated when said reed valve is closed after a reed valve opening period.

In order to enhance the control of the fuel injection amount, it is advantageous when the fuel injection device injects fuel with two or three injection pulses, whereas the first pulse or the first and second pulse, respectively, are terminated before the reed valve opens.

Other preferred embodiments of the present invention are laid down in further dependent claims.

With a fuel injection method for a 2-cycle engine composed according to this invention as described above, the intake passage is provided with a fuel injection device, and the fuel injection device is made to inject fuel so that injection of a predetermined amount of fuel may be completed at least while the reed valve is opened.

With a 2-cycle engine provided with a fuel injection device according to this invention, the amount of fuel injection appropriate for the engine operating state and the fuel injection timing required for completing injection of the fuel of the appropriate amount above at least while the reed valve is opened are calculated by control means on the basis of detection signals from the detector for detecting the opening and closing of the reed valve and from the detector for detecting the engine operating state, and the fuel injection device is made to inject fuel of an amount appropriate for the engine operating state at an appropriate timing.

When the detector for detecting the opening/closing timing of the reed valve is constituted of a crank chamber pressure detecting sensor and an intake pipe pressure detecting sensor, the opening and closing of the reed valve is decided by comparing the crank chamber pressure and the intake pipe inner pressure obtained from these detecting sensors.

When the detector for detecting the engine operating state is constituted of an engine speed detecting sensor and a load detecting sensor, the controller is made to store the fuel injection amount appropriate for the engine speed and the engine load beforehand detected by experiments or the like, or is made to store an equation for obtaining appropriate fuel injection amount, and the controller calculates the appropriate fuel injection amount on the basis of the informations obtained from the detecting sensors above.

Further, with another 2-cycle engine provided with a fuel injection according to this invention, the control means makes the fuel injection device inject fuel so that injection of a predetermined amount of fuel may be completed at least while the reed valve is opened on the basis of the engine operating state data obtained from a detector for detecting the engine operating state and beforehand stored data of the reed valve opening/closing timing appropriate for the engine operating state.

When the detector for detecting the engine operating state is constituted of an engine speed and load detecting sensor, the controller is made to store data of appropriate reed valve opening/closing timing beforehand detected for the engine speed and engine load by experiments or the like.

In the following, the present invention is explained in greater detail with respect to several embodiments thereof in conjunction with the accompanying drawings, wherein:
- Fig. 1: is a schematic vertical sectional view of a 2-cycle engine employing a fuel injection system;
- Fig. 2: is a block diagram roughly showing the structure of the control means;
- Fig. 3a: is a fuel injection timing diagram while the engine is in an stationary operating state;
- Fig. 3b: is a fuel injection timing diagram while the engine is in a transient operating state;
- Fig. 4a: is a fuel injection timing diagram showing the start and termination of each fuel injection, A, B, C and D in crank angles taking the TDC-BDC line as the ordinate;
- Fig. 4b: is a graph showing the process after the throttle is opened until the air-fuel ratio reaches the target value for each of four timings shown in Fig. 4a;
- Fig. 5: is a block diagram showing another structure of the control means; and
- Fig. 6: is a diagram showing four examples of injection processes controlled by the control means.

Several embodiments of fuel injection method for 2-cycle engine and 2-cycle engine provided with a fuel injection device are described hereafter referring to appended drawings.

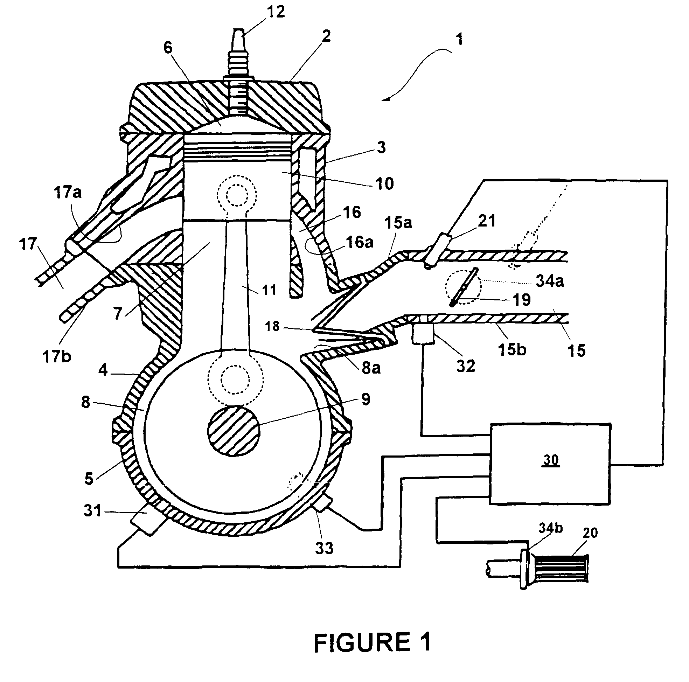

Fig. 1 shows a schematic sectional view of a 2-cycle engine provided with a fuel injection device.

In Fig. 1, the numeral 1 denotes a 2-cycle engine, which is constructed by piling up and fastening a cylinder head 2, cylinder blocks 3 and 4 and a crankcase 5, and has a cylinder 7 formed inside. The cylinder 7 is partitioned by a piston 10 into a combustion chamber 6 and a crank chamber 8. The crank chamber 8 has a crankshaft 9 rotatably journaled thereon, the cylinder 7 has a piston 10 disposed therein vertically slidably, and the crankshaft 9 is connected with the piston 10 through a connecting rod 11. The numeral 12 in Fig. 1 denotes an ignition plug.

The engine 1 has an intake passage 15, scavenging passage 16 and an exhaust passage 17 formed therethrough. The intake passage 15 is composed of a connecting pipe 15a and an intake pipe 15b, the connecting pipe 15a has one end opened into the air intake port 8a of the crank chamber 8 and the other end connected to the intake pipe 15b. A reed valve 18 is hermetically held between the air intake port 8a and the connecting pipe 15a. The reed valve 18 is opened when the piston ascends and the pressure in the crank chamber 8 becomes negative and is closed when the pressure in the crank chamber 8 becomes the same as or higher than the pressure in the intake passage 15 upstream of the reed valve 18.

The scavenging passage 16 is constituted of an scavenging path 16a formed through the cylinder blocks 3 into 4, and one and the other ends of this scavenging path 16a are connected with the cylinder 7 and the crank chamber 8, respectively. After the mixture is explosively combusted in the combustion chamber 6, the cylinder 7 side end of the scavenging path 16a is opened with the descend of the piston 10 so that crank chamber 8 communicates with the combustion chamber 6 and the mixture which has been suctioned into the crank chamber 8 is sent the combustion chamber 6.

Further, the exhaust passage 17 is composed of an exhaust path 17a formed through the cylinder block 3 and an exhaust pipe 17b, and one end of the exhaust path 17a is opened into the cylinder 7 while the other end thereof is connected with the exhaust pipe 17b. After the mixture is explosively combusted in the combustion chamber 6, this exhaust passage 17 is also opened with the descend of the piston 10 earlier than the scavenging path 16, and the combusted gas in the combustion chamber 6 begins to be discharged. By the air-fuel mixture entering the combustion chamber 6 through the scavenging passage 16 which is opened later than this, the remaining combusted gas is pushed out toward the exhaust passage 17, and the mixture is compressed by the piston 10 for the next combustion.

The intake pipe 15b is provided with a butterfly type throttle valve 19 for varying the intake passage cross-sectional area in the intake pipe 15c with the rotation of the throttle grip 20. A fuel injection device 21 is installed downstream of the throttle valve 19 (i.e., on the crank chamber side) in the intake pipe 15b. This fuel injection device 21 is made to spray fuel into the intake pipe 15b and produces air-fuel mixture at a predetermined timing by control means 30.

Hereafter is described the control means 30.

To the control means 30 are inputted detection signals from the crank chamber pressure detecting sensor 31, intake pipe pressure detecting sensor 32 which functions as a negative pressure detecting sensor, engine speed detecting sensor 33 and throttle opening detecting sensor 34 which functions as negative pressure detecting sensor or throttle grip position detecting sensor 34b.

The crank chamber pressure detecting sensor 31 is installed on the crankcase 5 to detect the pressure in the crank chamber 8, the intake pipe pressure detecting sensor 32 is installed on the intake pipe 15b downstream of the throttle valve 19 to detect the pressure in the intake passage 15 between the throttle valve 19 and the reed valve 18. The crank chamber pressure P1 and the intake pressure P2 detected by these sensors 31 and 32 are compared with each other by the comparator 30a of the control means 30.

The comparator 30a compares the crank chamber pressure P1 and the intake pipe pressure P2 with each other, and outputs the comparison result to the reed valve opening-closing timing calculator 30b. To the reed valve opening-closing timing calculator 30b are inputted the informations of the comparison results from the comparator 30a and the detection results from the engine speed detecting sensor 33. The engine speed detecting sensor is installed on the crankcase 3 and detects the number of rotation of the crankshaft 9 per unit time as the number of rotation N1 per unit time of the engine, namely as the engine speed rpm. The reed valve opening/closing timing calculator 30b decides that the reed valve 18 is in an opened state when the crank chamber pressure P1 is lower than the intake pipe pressure P2, that is, when P2-P1>0 or when P1-P2<0, and calculates the opening/closing timing T1 of the reed valve 18 for each cycle on the basis of the comparison result from the comparator 30a and the detection results of the engine speed detecting sensor 33 taking one revolution of the crankshaft 9 as one cycle.

On the other hand, the throttle opening detecting sensor 34a is disposed near the throttle valve to detect the opening of the throttle valve 19, and the load information M1 obtained from this throttle opening detecting sensor 34a and the information of the engine speed N1 obtained from the engine speed detecting sensor 33 are inputted to the fuel injection period calculator 30c. The load information M1 given to the engine by the vehicle rider may be directly by providing the throttle grip 20 for the propulsion unit of the vehicle, outboard motor or small boat with an throttle grip position detecting sensor 34b instead of the throttle opening detecting sensor 34a. Further, the negative pressure may be calculated with the intake pipe pressure detecting sensor 32 without using the throttle opening detecting sensor 34 or the throttle grip position detecting sensor 34b.

The fuel injection period calculator 30c stores data of fuel injection period L corresponding to various loads M and engine speeds N in a 2-dimensional map form so that appropriate fuel injection amount may be obtained according in the various engine operating state, and calculates appropriate fuel injection period L1 from this map on the basis of the detection results of the throttle opening detecting sensor 34a and the engine speed detecting sensor 33.

The data obtained from the reed valve opening-closing timing calculator 30b and fuel injection period calculator 30c are inputted to the fuel injection timing calculator 30d. The fuel injection timing calculator 30d calculates an appropriate injection timing S1 for each cycle, that is, both injection starting timing and injection terminating timing, from opening-closing timing T1 of the reed valve 18 and the fuel injection period L1 appropriate for the engine operation state obtained by the fuel injection period calculator 30c, and makes the fuel injection device 21 inject fuel at the desirable timing.

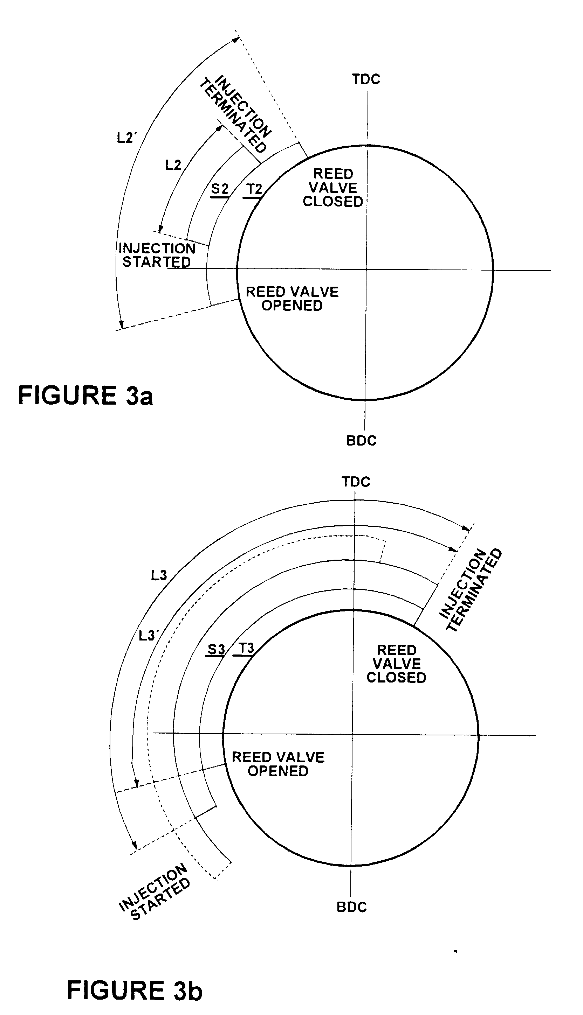

Fig. 3 is an injection timing diagram showing the fuel injection starting and terminating timings in crank angles taking the line connecting the TDC with BDC as reference, Fig. 3a is an injection timing diagram for low speed engine operation and Fig. 3b is for high speed engine operation.

In these diagrams, the lines T2 and T3 show the timings of opening and closing of the reed valve 18. On average, in the low speed range, the reed valve 18 is opened after the crank passes the bottom dead center (BDC) and before it reaches 270°, and is closed before the crank reaches the top dead center (TDC) as show in Fig. 3a, while, in the high speed range, the reed valve is opened after the crank passes the BDC and before it reaches 270°, and is closed when the crank passes TDC and is near the crank angle of 20 ~ 40°.

As against this, although the fuel injection amounts for low speed engine operation and for high speed engine operation differs from each other, and, therefore, the fuel injection periods L2 and L3 differs from each other according to the engine operating state, the fuel injection timing calculator 30d determines the injection timing S2 for low speed engine operation and the injection timing S3 for high speed engine operation so that fuel injection may be terminated at least as soon as or before the reed valve 18 is closed.

When the fuel injection period L2 is preferably shorter than the period L2' during which that the reed valve 18 is opened, the fuel injection period L2 can be determined so that it may be fully included within the period L2' during which the reed valve 18 is opened as shown in Fig. 3a, while, when the fuel injection period L3 is longer than the period L3' during which the reed valve 18 is opened as shown in Fig. 3b, the injection starting timing can be determined on the basis of the injection terminating timing by setting the injection terminating timing to the closing timing of the reed valve 18 (see the fuel injection timing S3 shown in a solid line in Fig. 3b) or to the timing before the reed valve is closed (see the portion shown in a dotted line in Fig. 3b).

Even if injected fuel sticks to the reed valve in the closed by setting the injection terminating timing to or earlier than the reed valve 18 closing timing, since such fuel can be stripped and conveyed into the cylinder 7 by the air-fuel mixture flow after the reed valve is opened, it becomes possible to reduce the response lag in the transient engine operating state.

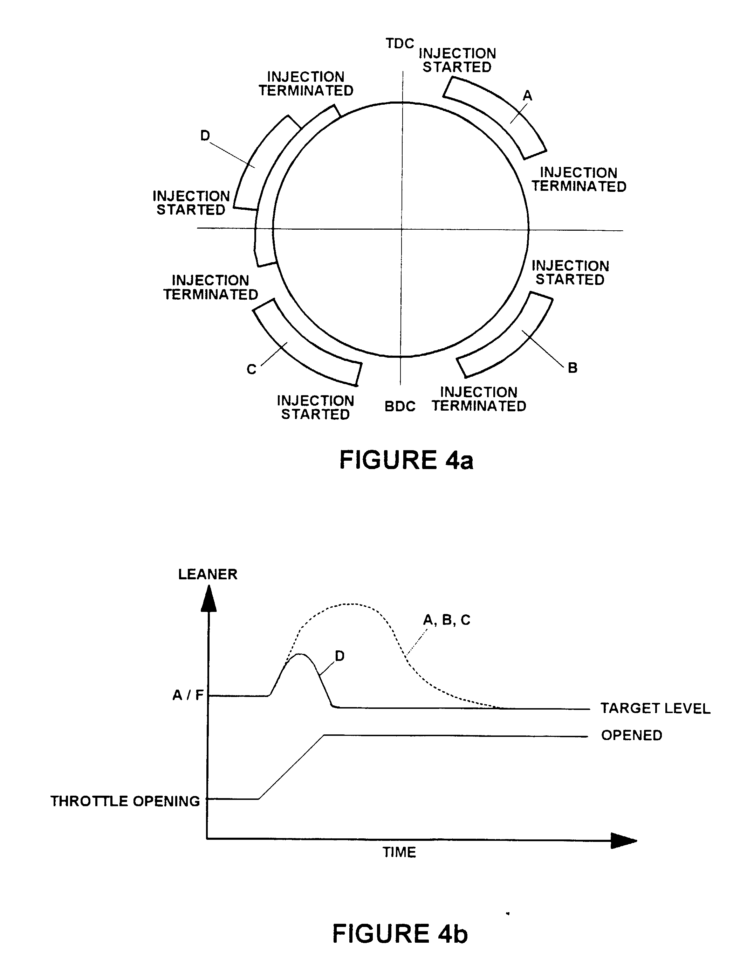

Fig. 4 shows the results of experiments carried out to know how the air-fuel ratio A/F changes when the throttle valve 19 opening is increased to accelerate the engine similarly from the low speed operating state keeping the fuel injection amount constant.

Fig. 4a shows four kinds of injection timings, namely, timings of injection starting and terminating, A, B, C and D in the low speed engine operating state at the start of acceleration an a crank angle diagram taking the TDC-BDC line as the ordinate. These timings A~D are set respectively in each of four (first to fourth) quadrants on the crank angle diagram. Fig. 4b shows the results of the experiments carried out to know how the air-fuel ratio A/F changes in the combustion chamber when the throttle opening is increased from zero (fully closed state) upto a medium or higher value within a predetermined time and is kept there. Although the fuel injection amount is increased and the fuel injection timing is changed with the increase of the throttle opening, most part of the injection starting and terminating timings are changed under the condition for maintaining the respective quadrants of Fig. 4a.

In the cases A to C where fuel is injected mostly in the quadrants 1 to 3, the air-fuel ratio increases (air content increases) with a delay from the start of the throttle opening increase, and the air-fuel ratio remains larger for a fairly long while even if the throttle opening increase is stopped. However, in the case D according to this invention, the air-fuel ratio changes in good response to the throttle opening change. That is, in the cases A to C, while the amount of air which passes the intake passage and reaches the combustion chamber increases with the increase of the throttle opening, fuel of an amount corresponding to the throttle opening and capable of realizing the target air-fuel ratio in the combustion chamber in the stationary state is injected into the intake passage while the reed valve is closed. On the other hand, while the reed valve is closed, since air does not flow through the intake passage, injected fuel is not atomized but sticks to the intake passage wall.

Once the injected fuel sticks to the intake passage wall, the area of the liquid fuel surface where the liquid fuel sticking to the intake passage surface evaporates is nearly equal in the surface area of the intake passage wall, and, although air flows toward the crank chamber along the intake passage wall in the next intake cycle, the sticking fuel can not fully evaporate, and proceeds toward the crank chamber as liquid film which flows as liquid along the intake passage wall. Therefore, the fuel reaches the combustion chamber later than air, which causes the air-fuel ratio in the combustion chamber to be larger, while it takes extra time for the liquid film flow which flows as liquid along the intake passage wall to stably reach the combustion chamber as much as the injected fuel constitutes liquid film flow, and the air-fuel ratio remains low even if the throttle opening is kept stationary.

However, in the case D, since an intake air flow already exists when fuel is injected, the injected fuel is efficiently atomized before fuel drop reaches and sticks to the intake passage wall, and only small percentage of fuel turns into liquid film flow. Therefore, the largest value of the air-ratio becomes smaller as compared with those for the cases A to C. Further, although the fuel injection amount increases with the increase of the throttle opening, since the intake flow speed also increases accordingly, liquid film flow does not increase so much, and, when the throttle opening change is suspended, the air-fuel ratio reaches the target level in the stationary state without so much delay. In addition, as compared with the fuel supplying system having a fuel injection device disposed upstream of the throttle valve as described later, the system according to this invention is excellent in transient responsiveness as much as small fuel drops do not stick to the throttle valve on their way for atomization in the intake air flow.

Further, although a high transient responsiveness is obtained by making the fuel injection device complete injection of all injection fuel while the reed valve is opened, sufficient transient responsiveness can be obtained also by making the fuel injection device complete injection of a predetermined amount (over 1/2, or over 1/5, or over 1/10) of injection fuel while the reed valve is opened.

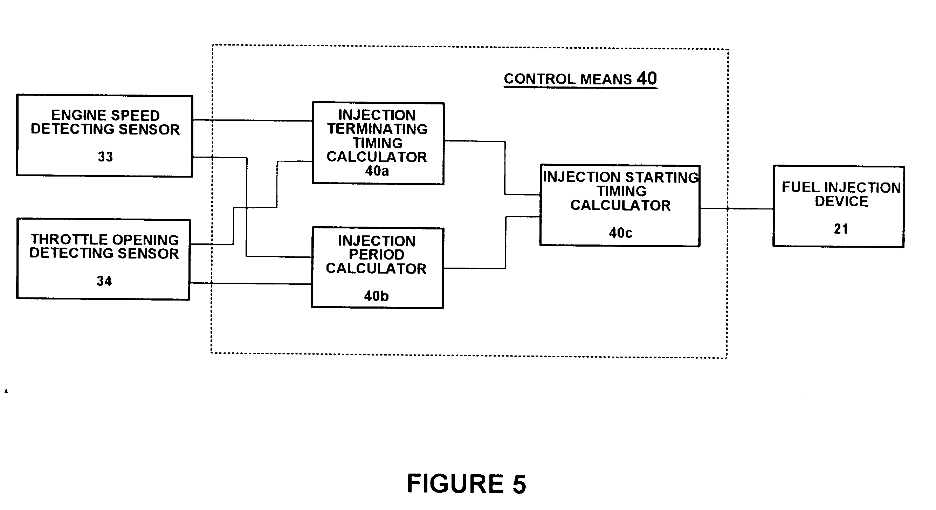

Fig. 5 shows another embodiment of control means.

This control means 40 does not use the crank chamber pressure detecting sensor 31 and the intake pipe pressure detecting sensor 32 in the 2-cycle engine shown in Fig. 1, but controls the fuel injection timing with only the detectidn results of the engine speed detecting sensor 33 and the throttle opening sensor 34a.

The state of change of the crank chamber negative pressure as against the time axis or crank angle axis (that is, load wave form and phase) is stably determined when the engine speed and the throttle opening are determined.

Therefore, the control means 40 is provided with an injection terminating timing calculator 40a having the injection terminating timing appropriate for the engine operating state (judged here from the throttle opening and engine speed), that is, for the crank chamber negative pressure wave form and the phase, beforehand obtained from experiments or the like and stored in the form of a 2-dimensional map, and an injection period calculator 40b storing, in the form of a 2-dimensional map, the fuel injection period appropriate for the engine operating state, and calculates the appropriate fuel injection terminating timing and fuel injection period for each cycle with these calculators 40a and 40b on the basis of the detection results of the throttle opening detecting sensor 34 and the engine speed detecting sensor 33.

The results of calculations at the calculators 40a and 40b are inputted to the injection timing calculator 40c, where the fuel injection starting timing is calculated from the fuel injection period on the basis of the injection terminating timing, then the injection timing is determined and outputted to the fuel injection device 21.

Although the control means 40 is so constructed that the fuel injection starting timing is calculated on the basis of the fuel injection terminating timing, this calculation is not limited to that in this embodiment but may be such that the injection starting timing is stored in the map form and the injection terminating timing is calculated on the basis of the injection starting timing. In any way, air will flow toward the crank chamber through the intake passage during most of the fuel injection period.

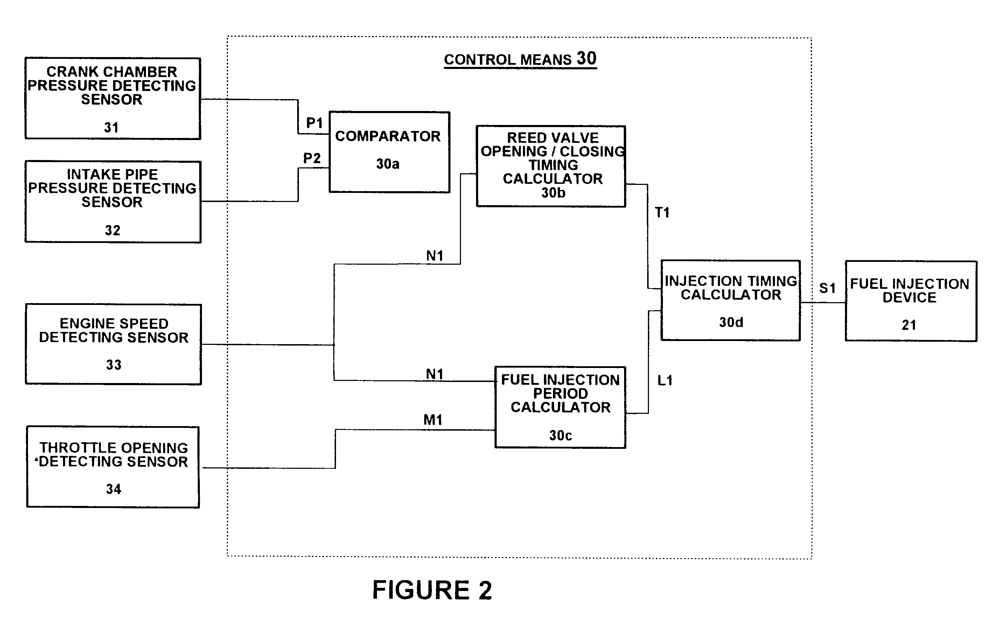

As apparent from figures 2, 5 and 6, it is possible that the control means 30, 40 at first calculate or choose the end timing of the ignition based on the stored data and measured engine speed as well as the throttle opening, that control means also have to calculate or choose the injection period closing timing and fuel amount based on the engine speed and the throttle opening. Further, the control means calculate the timing of injection starting by the substraction (as it is apparent from fig. 5 the output of injection terminating timing calculator 40a substracted by the output of injection period calculator 40b) in the injection starting timing calculator 40c.

Now, the control means 40 can control the injection device correctly to start and end the injection.

The injection device 21 can satisfy the needs of fuel amount and the needs that fuel is never injected after the intake valve 19 has been closed when the intake air flow stops.

Even when the injection is terminated at the timing when the intake air flow stops, at least the latest injection is done at the period when the intake valve is opened.

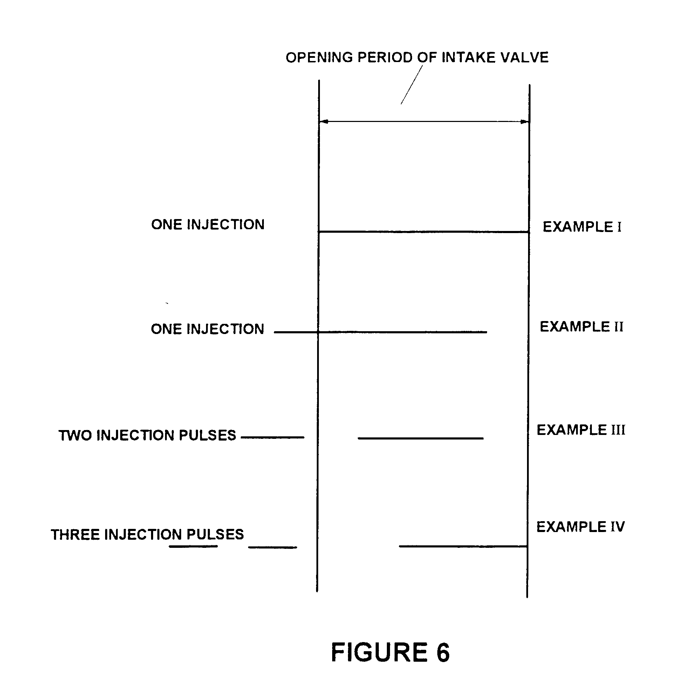

Fig. 6 shows four examples of injecting fuel in correspondence with the invention. Example I shows one injection starting when the intake valve 18 is opened and terminating when the intake valve 18 is closed.

Example II is an injection process comprising of only one injection, however, starting before the intake valve 18 opens and terminates before the intake valve 18 closes.

Example III shows an injection process comprising two injection pulses whereby the first pulse starts an terminates before the intake valve 18 opens, whereas the second pulse lies within the opening period of that intake valve 18, however, starts after the opening and terminates before closing of said intake valve 18.

Example IV shows an injection process comprising three injection pulses whereby the first and second pulses both start and terminate before the intake valve 18 opens, whereas the third pulse starts within the opening period and terminates when the intake valve 18 closes or is closed, respectively.

Although the operating state of the engine is detected from the throttle opening and the engine speed in two embodiments described above, the data for detecting the engine operating state are not limited to those in these embodiments, but may be the combination of arbitrary data such as, for example, the intake negative pressure and the engine speed, the crank chamber pressure and engine speed, the throttle grip position (potentiometer position) and the engine speed, and so forth.

Further, although the fuel injection device is installed downstream of the throttle valve in the first embodiment, the position of the injection device is not limited to that in this embodiment but may be upstream of the throttle valve. Of course, installation downstream of the throttle valve is excellent in transient responsiveness as much as injected fuel is hard to stick to the throttle valve.

With the fuel injection method for the 2-cycle engine according to an embodiment since the intake system is provided with a fuel injection device and the fuel injection device is made to inject fuel so that injection of a predetermined amount of fuel may be completed at least while the reed valve is opened, the probability that the injected fuel can pass the reed valve becomes very high, desired amount of fuel can be supplied into the cylinder, and the air-fuel ratio of the mixture can be accurately controlled.

With the 2-cycle engine provided with a fuel injection system according to another embodiment invention, since the control means calculates fuel injection amount appropriate for the engine operating state and a fuel injection timing appropriate for completing injection of fuel of the amount above while the reed valve is opened on the basis of the detection signals from the detector for detecting the reed valve opening/closing timings and detecting signals from the detectors for detecting the engine operating state, and makes the fuel injection device inject fuel of the appropriate amount above at the appropriate timing above, the probability that the injected fuel can pass the reed valve becomes very high, desired amount of fuel can be supplied into the cylinder, and the air-fuel ratio of the mixture can be accurately controlled.

Further, with the 2-cycle engine provided with another fuel injection system according to this invention, since the control means makes the fuel injection device inject fuel so that fuel injection may be completed while the reed valve is opened on the basis of the engine operating state data obtained from the detectors for detecting the engine operating state and the reed valve opening/closing timing data beforehand stored corresponding to the engine operating state, the probability that the injected fuel can pass the reed valve becomes very high, desired amount of fuel can be supplied into the cylinder, and the air-fuel ration of the mixture can be accurately controlled.

## Claims

1. Internal combustion engine (1) of the two-stroke cycle type, comprising a cylinder head (2) affixed to at least one cylinder block (3, 4), a crankcase (5) fastened to said at least one cylinder block (3, 4) and defining a crank chamber (8) accommodating a crankshaft (9) and communicating with at least one cylinder (7), at least one piston (9) reciprocatably received in said cylinder (7), and an intake passage (15) provided with a throttle valve (19) and communicating with said crank chamber (8) via an opening being operable by a reed valve (18), wherein a fuel injection device (21) provided at the intake passage (15) for injecting fuel into said intake passage (15), said fuel injection device (21) being controllable by a control means (30; 40) in response to engine operating conditions detected by an intake pipe pressure detecting sensor (32), an engine speed detecting sensor (33) and a throttle opening detecting sensor (34) for supplying said control means (30) with respective signals indicative of said engine operating conditions, **characterized in that** a crank chamber pressure detecting sensor (31) being provided and that said control means (30) comprising a comparator (30a) for comparing signals (P1, P2) supplied by said crank chamber pressure detecting sensor (31) and said intake pipe pressure detecting sensor (32), a reed valve opening/closing timing calculator (30b) fed by said comparator (30a) and by a signal (N1) of said engine speed detecting sensor (33), whereas said signal (N1) of said engine speed detecting sensor (33) in addition is fed to a fuel injection period calculator (30c) further receiving signals (M1) of said throttle opening detecting sensor (34), and an injection timing calculator (30d) supplied with respective signals (T1, L1) of said reed valve opening/closing timing calculator (30b) and said fuel injection period calculator (30c).

2. Internal combustion engine according to claim 1, **characterized in that** said crank chamber pressure detecting sensor (31) being provided at a wall of said crankcase (5), said intake pipe pressure detecting sensor (32) being located downstream of said throttle valve (19), said engine speed detecting sensor (33) being arranged within said crank chamber (8) and said throttle opening detecting sensor (34) being either provided at said throttle valve (19) or at a throttle grip (20).

3. Internal combustion engine according to claim 1 or 2, **characterized in that** said control means (40) comprising an injection terminating or starting timing calculator (40a) and an injection period calculator (40b) both supplied with respective signals of said engine speed detecting sensor (33) and said throttle opening detecting sensor (34), and an injection timing calculator (40c) connected to said injection terminating or starting timing calculator (40a) and said injection period calculator (40b).

4. Internal combustion engine according to at least one of claims 1 to 3, **characterized by** a detector for detecting the opening/closing timing of said reed valve (18), respectively.

5. Internal combustion engine according to at least one of claims 1 to 4, **characterized in that** said control means (30; 40) is provided with a storage means containing a map of opening/closing timing data of said intake valve means (18) or said reed valve (18), respectively.

6. Internal combustion engine according to at least one of claims 1 to 5, **characterized in that** said fuel injection device (21) is arranged upstream or downstream of said throttle valve (19).

7. Method of providing an internal combustion engine of the two-stroke cycle type with fuel, said engine comprising a cylinder head (2) affixed to at least one cylinder block (3, 4), a crankcase (5) fastened to said at least one cylinder block (3, 4) and defining a crank chamber (8) accommodating a crankshaft (9) and communicating with at least one cylinder (7), at least one piston (9) reciprocatably received in said cylinder (7), and an intake passage (15) provided with a throttle valve (19) and communicating with said crank chamber via an opening being operable by a reed valve (18), wherein a fuel injection device (21) injects fuel into said intake passage (15) and being controlled by a control means (30; 40), whereas said control means (30; 40) controls said fuel injection device (21) on the basis of engine operating conditions detected by an intake pipe pressure detecting sensor (32), an engine speed detecting sensor (33) and a throttle opening detecting sensor (34), **characterized in that** a crank chamber pressure detecting sensor (31) detects the crank chamber pressure and that said control means (30) compares pressure signals (P1, P2) of said crank chamber pressure detecting sensor (31) and an intake pipe pressure detection sensor (32) and inputs the respective result to a reed valve opening/closing timing calculator (30b) which also receives an engine speed signal (N1) and supplies a signal (T1) to an injection timing calculator (30d), said injection timing calculator (30d) also receives a further signal (L1) from a fuel injection period calculator (30c) which calculates a signal (L1) based on said engine speed signal (M1) and a throttle opening signal (N1), whereby said injection timing calculator (30d) inputs a control signal (S1) to said fuel injection device (21).

8. Method according to claim 7, **characterized in that** at least most of a predetermined amount of fuel is injected during the period of time said reed valve (18) is opened.

9. Method according to claim 7 or 8, **characterized in that** said control means (40) calculates an injection terminating or starting timing and an injection period of the basis of respective supplied engine speed signals and throttle opening signals, and then calculates an injection timing on the basis of said calculated results.

10. Method according to claim 7, **characterized in that** the fuel injection is terminated when said reed valve (18) is closed.

11. Method according to claim 8, **characterized in that** the fuel injection device (21) starts with fuel injection prior to the opening of said reed valve (18), whereas most of the amount of fuel is injected during the opening period of said reed valve (18) and terminates the fuel injection prior to the closing of said reed valve (18).

12. Method according to claim 11, **characterized in that** the fuel injection device (21) injects fuel with two injection pulses, whereas the first pulse is terminated before the reed valve (18) opens.

13. Method according to claim 8, **characterized in that** the fuel injection device (21) injects fuel with three injection pulses, whereas the first and second pulses are terminated before the reed valve (18) opens.

## Patentansprüche

1. Brennkraftmaschine (1) des Zweitakt-Typs mit einem Zylinderkopf (2), der an zumindest einem Zylinderblock (3,4) angeschlossen ist, einem Kurbelgehäuse (5), das an dem zumindest einen Zylinderblock (3,4) befestigt ist und eine Kurbelkammer (8) festlegt, die eine Kurbelwelle (9) aufnimmt und mit zumindest einem Zylinder (7) kommuniziert, mindestens einem Kolben (9), der hin und her bewegbar in diesem Zylinder (7) aufgenommen ist, und mit einem Einlaßkanal (15), der mit einem Drosselventil (19) versehen ist und mit dieser Kurbelkammer (8) über eine Öffnung, die mittels eines Klappenventils (18) betätigbar ist, kommuniziert, wobei eine Kraftstoffeinspritzeinrichtung (21) an dem Einlaßkanal (15) vorgesehen ist zum Einspritzen von Kraftstoff in diesen Einlaßkanal (15), wobei diese Kraftstoffeinspritzeinrichtung (21) mittels einer Steuereinrichtung (30;40) in Abhängigkeit von Motorbetriebszuständen steuerbar ist, welche von einem Ansaugrohrdruck-Erfassungssensor (32), einem Motorgeschwindigkeits-Erfas-sungssensor (33) und einem Drosselöffnungs-Erfassungssensor (34) erfaßt werden, um diese Steuereinrichtung (30) mit entsprechenden Signalen zu versorgen, die diese Motorbetriebszustände anzeigen, **dadurch gekennzeichnet,** daß ein Kurbelkammerdruck-Erfassungssensor (31) vorhanden ist, und daß diese Steuereinrichtung (33) einen Komparator (30a) enthält zum Vergleichen von Signalen (P1,P2), die von diesen Kurbelkammerdruck-Erfassungssensor (31) und diesem Ansaugrohrdruck-Erfassungssensor (32) zugeführt werden, einen Rechner (30d) für die Öffnungs-/Schließungs-Taktung des Klappenventils enthält, der von diesem Komparator (30a) gespeist und dem ein Signal (N1) von diesem Motorgeschwindigkeits-Erfassungssensor (33) zugeführt wird, wobei dieses Signal (N1) von diesem Motorgeschwindigkeits-Erfassungssensor (33) zusätzlich einem Rechner (30c) für die Kraftstoffeinspritzperiode eingegeben wird, der des weiteren Signale (M1) von diesem Drosselöffnungs-Erfassungssensor (33) empfängt, und einen Rechner (30d) für die Einspritz-Taktung enthält, welcher mit entsprechenden Signalen (T1,L1) von diesem Rechner (30b) für die Öffnungs-/Schließungs-Taktung des Klappenventils und diesem Rechner (30c) für die Kraftstoffeinspritzperiode versorgt wird.

2. Brennkraftmaschine nach Anspruch 1, **dadurch gekennzeichnet,** daß dieser Kurbelkammerdruck-Erfassungssensor (31) an einer Wandung von diesem Kurbelgehäuse (5) angeordnet ist, daß dieser Ansaugrohrdruck-Erfassungssensor (32) stromabwärts von diesem Drosselventil (19) angeordnet ist, daß dieser Motorgeschwindigkeits-Erfassungssensor (33) innerhalb der Kurbelkammer (8) vorhanden ist, und daß dieser Drosselöffnungs-Erfassungssensor (34) entweder bei diesem Drosselventil (19) oder bei einem Drosselhandgriff (20) angeordnet ist.

3. Brennkraftmaschine nach Anspruch 1 oder 2, **dadurch gekennzeichnet**, daß diese Steuereinrichtung (40) umfaßt einen Rechner (40a) für die Einspritzungsbeendigung oder für die Start-Taktung sowie einen Rechner (40b) für die Einspritzperiode, wobei beide mit entsprechenden Signalen von diesem Motorgeschwindigkeits-Erfassungssensor (33) und diesem Drosselöffnungs-Erfassungssensor (34) versorgt werden, und daß ein Rechner (40c) für die Einspritz-Taktung an diesem Rechner (40a) für die Einspritzbeendigung oder Start-Taktung und diesem Rechner (40b) für die Einspritzperiode angeschlossen ist.

4. Brennkraftmaschine nach zumindest einem der Ansprüche 1 bis 3, **gekennzeichnet durch** einen Detektor zur Erfassung der jeweiligen Öffnungs-/Schließungs-Taktung von diesem Klappenventil (18).

5. Brennkraftmaschine nach zumindest einem der Ansprüche 1 bis 4, **dadurch gekennzeichnet,** daß diese Steuereinrichtung (30;40) mit einer Speichereinrichtung versehen ist, die ein Verzeichnis von Daten bezüglich der Öffnungs-/Schließungs-Taktung von dieser Einlaßventileinrichtung (18) bzw. diesem Klappenventil (18) enthält.

6. Brennkraftmaschine nach zumindest einem der Ansprüche 1 bis 5, **dadurch gekennzeichnet,** daß diese Kraftstoffeinspritzeinrichtung (21) stromaufwärts oder stromabwärts von diesem Drosselventil (19) angeordnet ist.

7. Verfahren zum Versorgen einer Brennkraftmaschine des Zweitakt-Typs mit Kraftstoff, wobei diese Brennkraftmaschine aufweist einen Zylinderkopf (2), der an mindestens einem Zylinderblock (3,4) angeschlossen ist, ein Kurbelgehäuse (5), das an diesem zumindest einem Zylinderblock (3,4) befestigt ist und eine Kurbelkammer (8) festlegt, die eine Kurbelwelle (9) aufnimmt und mit zumindest einem Zylinder (7) kommuniziert, zumindest einen Kolben (9), der hin und her bewegbar in diesem Zylinder (7) aufgenommen ist, und einen Einlaßkanal (15), der mit einem Drosselventil (19) versehen ist und mit dieser Kurbelkammer über eine Öffnung kommuniziert, die von einem Klappenventil (18) betätigbar ist, wobei eine Kraftstoffeinspritzeinrichtung (21) Kraftstoff in diesen Einlaßkanal (15) einspritzt und von einer Steuereinrichtung (30;40) gesteuert wird, wobei diese Steuereinrichtung (30;40) diese Kraftstoffeinspritzeinrichtung (21) auf der Grundlage von Motorbetriebszuständen steuert, die erfaßt werden von einem Ansaugrohrdruck-Erfassungssensor (32), einem Motorgeschwindigkeits-Erfassungssensor (33) und einem Drosselöffnungs-Erfassungssensor (34), **dadurch gekennzeichnet,** daß ein Kurbelkammerdruck-Erfassungssensor (31) den Kurbelkammerdruck erfaßt, und daß diese Steuereinrichtung (30) Drucksignale (P1,P2) von diesem Kurbelkammerdruck-Erfassungssensor (31) und von einem Ansaugrohrdruck-Erfassungssensor (32) miteinander vergleicht und das entsprechende Ergebnis einem Rechner (30b) für die Öffnungs-/Schließungs-Taktung des Klappenventils eingibt, welcher ebenfalls ein Motorgeschwindigkeitssignal (N1) empfängt und ein Signal (T1) an einen Rechner (30d) für die Einspritz-Taktung zuführt, wobei dieser Rechner (30d) für die Einspritz-Taktung des weiteren ein weiteres Signal (L1) von einem Rechner (30c) für die Kraftstoffeinspritzperiode empfängt, der ein Signal (L1) auf der Grundlage von diesem Motorgeschwindigkeitssignal (M1) und einem Drosselöffnungssignal (N1) berechnet, wodurch dieser Rechner (30d) für die Einspritz-Taktung ein Steuersignal (S1) dieser Kraftstoffeinspritzeinrichtung (21) eingibt.

8. Verfahren nach Anspruch 7, **dadurch gekennzeichnet,** daß zumindest der größte Teil einer vorbestimmten Menge von Kraftstoff während einer Zeitperiode eingespritzt wird, zu welcher dieses Klappenventil (18) geöffnet ist.

9. Verfahren nach Anspruch 7 oder 8, **dadurch gekennzeichnet,** daß diese Steuereinrichtung (40) einen Einspritzbeendigungs- oder Anfangszeitpunkt sowie eine Einspritzperiode auf der Grundlage entsprechend zugeführter Motorgeschwindigkeitssignale und Drosselöffnungssignale berechnet und dann anschließend eine Einspritz-Taktung auf der Grundlage dieser berechneten Ergebnisse berechnet.

10. Verfahren nach Anspruch 7, **dadurch gekennzeichnet,** daß die Kraftstoffeinspritzung beendet wird, wenn dieses Klappenventil (18) geschlossen wird.

11. Verfahren nach Anspruch 8, **dadurch gekennzeichnet,** daß die Kraftstoffeinspritzeinrichtung (21) vor dem Öffnen dieses Klappenventils (18) mit der Kraftstoffeinspritzung beginnt, wobei die größte Menge des Kraftstoffs während der Öffnungsperiode von diesem Klappenventil (18) eingespritzt wird, und daß diese Kraftstoffeinspritzung vor dem Schließen des Klappenventils (18) endet.

12. Verfahren nach Anspruch 11, **dadurch gekennzeichnet,** daß die Kraftstoffeinspritzeinrichtung (21) Kraftstoff mit zwei Einspritzimpulsen einspritzt, wobei der erste Impuls beendet ist, bevor das Klappenventil (18) öffnet.

13. Verfahren nach Anspruch 8, **dadurch gekennzeichnet,** daß die Kraftstoffeinspritzeinrichtung (21) Kraftstoff mit drei Einspritzimpulsen einspritzt, wobei die ersten und zweiten Impulse beendet sind, bevor das Klappenventil (18) öffnet.

## Revendications

1. Moteur à combustion interne (1) de type à deux temps comprenant une culasse (2) fixée à au moins un bloc-cylindres (3,4), un carter de vilebrequin (5) fixé audit au moins un bloc-cylindres (3,4) et définissant une chambre de vilebrequin (8) logeant un vilebrequin (9) et communiquant avec au moins avec un cylindre (7), au moins un piston (9) logé de façon déplacable en va-et-vient dans ledit cylindre (7) et un passage d'admission (15) pourvu d'une soupape d'étranglement (19) et communiquant avec ladite chambre de vilebrequin (8) via une ouverture susceptible d'être actionnée par une valve à membrane (18), dans lequel un dispositif d'injection de carburant (21) est prévu au niveau du passage d'admission (15) pour injecter du carburant dans ledit passage d'admission (15), ledit dispositif d'injection de carburant (21) pouvant être commandé par des moyens de commande (30; 40) en réponse aux conditions de fonctionnement du moteur, détectées par un capteur de détection de pression de tuyau d'admission (32), un capteur de détection de vitesse du moteur (33) et un capteur de détection d'ouverture d'étranglement (34) pour fournir auxdits moyens de commande (30) des signaux respectifs indicatifs desdites conditions de fonctionnement du moteur, caractérisé en ce qu'un capteur de détection de pression de chambre de vilebrequin (31) est prévu, et en ce que lesdits moyens de commande (30) comprennent un comparateur (30a) pour comparer des signaux (P1, P2) fournis par ledit capteur de détection de pression de chambre de vilebrequin (31) et ledit capteur de mesure de pression de tuyau d'admission (32), un calculateur de déclenchement d'ouverture/fermeture de valve à membrane (30b), alimenté par ledit comparateur (30a) et par un signal (N1) dudit capteur de détection de vitesse de moteur (33), tandis que ledit signal (N1) dudit capteur de détection de vitesse de moteur (33) est en outre fourni à un calculateur de période d'injection de carburant (30c) recevant en outre des signaux (M1) dudit capteur de détection d'ouverture d'étranglement (34), et un calculateur de déclenchement d'injection (30d) alimenté avec des signaux (T1, L1) respectifs dudit calculateur de déclenchement d'ouverture/fermeture de valve à membrane (30b) et dudit calculateur de période d'injection de carburant (30c).

2. Moteur à combustion interne selon la revendication 1, caractérisé en ce que ledit capteur de détection de pression de chambre de vilebrequin (31) est prévu sur une paroi dudit carter de vilebrequin (5), ledit capteur de détection de pression de tuyau d'admission (32) étant placé en aval de ladite soupape d'étranglement (19), ledit capteur de détection de vitesse de moteur (33) étant agencé dans ladite chambre de vilebrequin (8) et ledit capteur de détection d'ouverture d'étranglement (34) étant prévu au niveau de la soupape d'étranglement (19), ou bien au niveau d'une manette d'étranglement (20).

3. Moteur à combustion interne selon la revendication 1 ou 2, caractérisé en ce que lesdits moyens de commande (40) comprennent un calculateur de déclenchement de fin ou de début d'Injection (40a) et un calculateur de période d'injection (40b), tous deux alimentés avec des signaux respectifs dudit capteur de détection de vitesse de moteur (33) et dudit capteur de détection d'ouverture d'étranglement 34), et un calculateur de déclenchement d'injection (40c) relié audit calculateur de déclenchement de fin ou de début d'injection (40a) et audit calculateur de période d'injection (40b).

4. Moteur à combustion interne selon au moins l'une des revendications 1 à 3, caractérisé par un détecteur servant à détecter le déclenchement d'ouverture/fermeture de ladite valve à membrane (18), respectivement.

5. Moteur à combustion interne selon au moins l'une des revendications 1 à 4, caractérisé en ce que lesdits moyens de commande (30 ; 40) sont respectivement pourvus de moyens de stockage contenant une carte de données de déclenchement d'ouverture/fermeture desdits moyens formant soupape d'admission (18) ou de ladite valve à membrane (18).

6. Moteur à combustion interne selon au moins l'une des revendications 1 à 5, caractérisé en ce que ledit dispositif d'injection de carburant (21) est agencé en amont ou en aval de ladite soupape d'étranglement (19).

7. Procédé d'alimentation en carburant d'un moteur à combustion interne du type à deux temps, ledit moteur comprenant une culasse (2) fixée à au moins un bloc-cylindres (3, 4), un carter de vilebrequin (5) fixé audit au moins un bloc-cylindres (3, 4) et définissant une chambre de vilebrequin (8) logeant un vilebrequin (9) et communicant avec au moins un cylindre (7), au moins un piston (9) logé de façon déplacable en va-et-vient dans ledit cylindre (7), et un passage d'admission (15) pourvu d'une soupape d'étranglement (19) et communiquant avec ladite chambre de vilebrequin via une ouverture susceptible être actionnée par une valve à membrane (18), dans lequel un dispositif d'injection de carburant (21) injecte du carburant dans ledit passage d'admission (15) et est commandé par des moyens de commande (30; 40), tandis que lesdits moyens de commande (30; 40) commandent ledit dispositif d'injection de carburant (21) d'après les conditions de fonctionnement du moteur détectées par un capteur de détection de pression de tuyau d'admission (32), un capteur de détection de vitesse de moteur (33) et un capteur de détection d'ouverture d'étranglement (34), caractérisé en ce qu'un capteur de détection de pression de chambre de vilebrequin (31) détecte la pression de chambre de vilebrequin, et en ce que lesdits moyens de commande (30) comparent des signaux de pression (P1, P2) dudit capteur de détection de pression de chambre de vilebrequin (31) et d'un, capteur de détection de pression de tuyau d'admission (32) et appliquent le résultat respectif à un calculateur de déclenchement d'ouverture/fermeture de valve à membrane (30b) qui reçoit également un signal de vitesse de moteur (N1) et fournit un signal (T1) à un calculateur de déclenchement d'injection (30d), ledit calculateur de déclenchement d'injection (30d) reçoit également un autre signal (L1) provenant d'un calculateur de période d'injection de carburant (30c) qui calcule un signal (L1) d'après ledit signal de vitesse de moteur (M1) et un signal d'ouverture d'étranglement (N1), de manière que ledit calculateur de déclenchement d'injection (30d) applique un signal de commande (S1) audit dispositif d'injection de carburant (21).

8. Procédé selon la revendication 7, caractérisé en ce qu'au moins la majeure partie d'une quantité prédéterminée de carburant est injectée durant la période pendant laquelle ladite valve à membrane (18) est ouverte.

9. Procédé selon la revendication 7 ou 8, caractérisé en ce que lesdits moyens de commande (40) calculent un déclenchement de fin ou de début d'injection et une période d'injection d'après des signaux, fournis respectivement, de vitesse de moteur et d'ouverture d'étranglement, et calculent ensuite un déclenchement d'injection d'après lesdits résultats calculés.

10. Procédé selon la revendication 7, caractérisé en ce que l'injection de carburant est terminée lorsque ladite valve à membrane (18) est fermée.

11. Procédé selon la revendication 8, caractérisé en ce que ledit dispositif d'injection de carburant (21) commence par une injection de carburant avant l'ouverture de ladite valve à membrane (18), tandis que la majeure partie de la quantité de carburant est injectée durant la période d'ouverture de ladite valve à membrane (18), et termine l'injection de carburant avant la fermeture de ladite valve à membrane (18).

12. Procédé selon la revendication 11, caractérisé en ce que le dispositif d'injection de carburant (21) injecte du carburant en ceux impulsions d'injection, la première impulsion étant terminée avant que la valve à membrane (18) s'ouvre.

13. Procédé selon la revendication 8, caractérisé en ce que le dispositif d'injection de carburant (21) injecte du carburant en trois impulsions d'injection, les première et deuxième impulsions étant terminées avant que la valve à membrane (18) s'ouvre.
